# EUROPÄISCHE PATENTSCHRIFT

(11) **EP 1 169 277 B1**
(45) Veröffentlichungstag und Bekanntmachung des Hinweises auf die Patenterteilung: **12.01.2005**
(21) Anmeldenummer: 00929226.9
(22) Anmeldetag: 20.03.2000
(51) Int. Cl.: C03C 25/12, C03C 25/16, D06M 15/70, D01F 11/00, B29B 15/12, C08J 5/06

(54) **VERFAHREN ZUR ERZEUGUNG VON BESCHICHTETEN VERSTÄKUNGSFÄDEN AUS HOCHLEISTUNGSFASERN**
METHOD FOR PRODUCING COATED REINFORCING THREADS MADE OF HIGH-PERFORMANCE FIBRES
PROCEDE PERMETTANT DE PRODUIRE DES FILS DE RENFORCEMENT REALISES EN FIBRES HAUTEMENT PERFORMANTES ET DOTES D'UN REVETEMENT

(30) Priorität: 22.03.1999 DE 19912919
(43) Veröffentlichungstag der Anmeldung: 09.01.2002
(73) Patentinhaber: P-D Tec Fil GmbH Technische Filamente, 04758 Oschatz (DE)
(72) Erfinder: Frenken Johanes, D-52080 Aachen (DE); Rector Horst-Dieter, D-52441 Linnich (DE)
(74) Vertreter: König, Werner, Dipl.-Ing.
(86) Internationale Anmeldenummer: PCT/DE2000/000834
(87) Internationale Veröffentlichungsnummer: WO 2000/056676

(56) Entgegenhaltungen:
- EP-A- 0 292 572
- PATENT ABSTRACTS OF JAPAN vol. 1997, no. 02, 28. Februar 1997 (1997-02-28) & JP 08 284069 A (TEIJIN LTD), 29. Oktober 1996 (1996-10-29)

## Beschreibung

Die Erfindung betrifft ein Verfahren zur Erzeugung von getränkten Verstärkungsfäden aus Hochleistungsfasern, insbesondere aus Glas-, Kohlenstoff- und Aramidfasern.

Die EP-A-0 292 572 beschreibt ein Verfahren zur Herstellung von faserverstärkten Harzfäden durch Imprägnierung der Fäden mit einem unvernetzten Harz, Ziehung durch eine Düse, Drehung und vollständige Vernetzung. Die Drehung der Fäden ist dabei erkennbar niedrig, so dass auf die Fäden ein Wringeffekt nicht ausgeübt werden kann, der die zwischen den Fäden zuvor gegebenen Hohlräume verschließen könnte.

Nach den bisher bekannten Verfahren hergestellte Verstärkungsfäden weisen den Nachteil auf, dass ihr Tränkungsgrad und damit auch ihr Querschnitt über die gesamte Lauflänge nicht konstant sind, woraus sich Ungleichmäßigkeiten hinsichtlich ihrer Belastbarkeit ergeben.

Die Aufgabe der vorliegenden Erfindung besteht darin, bei der Herstellung von Verstärkungsfäden insbesondere die vorerwähnten Nachteile zu vermeiden.

Diese Aufgabe wird erfindungsgemäß dadurch gelöst, dass die Fäden bei 0-Drehung oder bei einer Schutzdrehung von ≤ 120 Drehungen/m in Polymer-Dip getränkt werden, die getränkten Fäden dann durch eine Düse gezogen werden, die getränkten Fäden nach dem Austritt aus der Düse in einer ersten Heizzone oberflächlich getrocknet, im Kern aber noch feucht gehalten werden, sie erst danach in einer zweiten Heizzone mit einer über die Schutzdrehung bis zu einer maximalen Gesamtdrehung von 400 Drehungen/m hinausgehenden Drehung versehen und durch Erhitzung in dieser Drehung fixiert werden und die vorstehenden Verfahrensschritte kontinuierlich in einem Zuge durchgeführt werden.

Die jedenfalls geringe Drehung der Fäden während des Tränkvorgangs führt dazu, dass das Polymer an die einzelnen Fasern herantreten und diese schützend umhüllen kann. In der anschließenden Düse wird der aus Rohfasern und Polymer gebildete Fadenquerschnitt genau vorgegeben. Da der Querschnitt des vorgelegten Fadens dabei im voraus bekannt ist wird auf diese Weise auch die Menge Polymer bestimmt, die der Faden nach Passieren der Düse trägt. Die bei den Trocknungsvorgängen durch Verdunstung im Faden frei werdenden Hohlräume werden in der zweiten Heizzone durch die dort dem Faden aufgegebene Drehung geschlossen, so dass sich nach dem Fixieren ein kompakter, hochbelastbarer Faden mit einer homogenen Verteilung des Polymers im Fadenquerschnitt ergibt. Die kontinuierliche Verfahrensführung führt insbesondere zu einer Einsparung von Zeit und damit auch Kosten Darüber hinaus sind bei diesem Verfahren Feuchtigkeit und Temperatur exakt über die Fadenlänge beherrschbar. Verformungen, die im Falle von Zwischenlagerungen ansonsten auftreten können, sind bei diesem Verfahren ganz ausgeschlossen.

Weiter wird erfindungsgemäß vorgeschlagen, dass der Feuchtegehalt der Fäden zumindest vor Eintritt in die zweite Heizzone auf einen bestimmten Wert konstant eingeregelt wird. Dadurch wird die Konstanz der Fadenbeschaffenheit über die Fadenlänge weiter gesteigert.

Weiter wird erfindungsgemäß vorgeschlagen, dass die getränkten Fäden nach dem Austritt aus der Düse in einer ersten Heizzone oberflächlich getrocknet, im Kern aber noch feucht gehalten werden und dass sie erst danach in einer zweiten Heizzone mit einer Drehung bis 400 U/m versehen und durch Erhitzung in dieser Drehung fixiert werden.

Weiter wird erfindungsgemäß vorgeschlagen, dass die Fäden nach dem Fixieren aufgespult werden. Sie können danach der weiteren Verarbeitung zugeführt werden.

Es hat sich als zweckmäßig erwiesen, dass die Fäden beim Aufspulen endgetrocknet werden.

Die nach dem Verfahren hergestellten Fäden eignen sich vor allem aufgrund ihrer hohen Biegewechselfestigkeit in besonderem Maße zur Verstärkung von Antriebsriemen und Hochdruckschläuchen. Aus diesen Fäden können Gewebe und Gelege hergestellt werden, die wiederum zur Verstärkung von Reifen und Transportbändern eingesetzt werden können. Darüberhinaus können die so hergestellten Fäden für viele andere Anwendungen verwendet werden.

Nach dem erfindungsgemäßen Verfahren wird zum Beispiel ein Faden aus Hochleistungsfasern, insbesondere aus Glas-, Kohlenstoff- und Aramidfasern, bei einer Schutzdrehung von 20 Umdrehungen/m durch ein Tränkbad geführt, in dem sich ein Polymer, zum Beispiel Latex, in flüssigem Zustand befindet. Der nur gering gedrehte Faden läßt dem Polymer Raum, in den Faden einzudringen und die einzelnen Fasern zu umhüllen.

Der so getränkte Faden wird dann einer Düse zugeführt, die an ihrem Austritt den Querschnitt des Fadens und damit aufgrund des bekannten Querschnitts der Rohfasern auch den Querschnitt des von dem Polymer eingenommenen Raumes und damit letztlich auch den Gewichtsanteil des im Faden enthaltenen Polymers bestimmt. Der Faden verläßt die Düse mit einem über die Länge gleichbleibenden Querschnitt. Er wird anschließend einer ersten Heizzone zugeführt, in der er oberflächlich getrocknet wird und eine Haut bildet. Die Heizung der ersten Heizzone ist jedenfalls so einzustellen, dass der Faden im Kern nach Verlassen dieser Heizzone noch feucht ist.

Dieser Faden wird dann über ein Lieferwerk einer zweiten Heizzone zugeführt, an deren Ende dem Faden eine Drehung von zum Beispiel 300 Umdrehungen/m aufgegeben wird. Diese Drehung wirkt sich auf den Faden vom Ausgangsende des Lieferwerks an aus. Sie führt zu einem Wringeffekt, der die Fasern zu einem kompakten Faden verbindet, indem er Hohlräume verschließt, die sich in den Heizzonen durch Verdampfungseffekte gebildet haben. Zumindest vor der zweiten Heizzone wird die Feuchte des Fadens erfaßt und durch entsprechende Regelung die erste Heizzone eingestellt. Eine entsprechende Erfassung der Feuchte des Fadens ist auch nach der zweiten Heizzone sinnvoll, um darüber dann die zweite Heizzone zu regeln.

Es kann sich als zweckmäßig erweisen, die Funktionen der ersten und der zweiten Heizzone in einer Heizzone zusammenzufassen.

Die Drehung des Fadens wird durch eine Spulvorrichtung aufgebracht, welche gleichzeitig den Faden auf eine Spule aufwickelt. Bei diesem Wickelvorgang erfolgt eine abschließende Trocknung des Fadens.

Im Verlauf der zweiten Heizzone erfolgt eine Fixierung des Fadens und der ihm aufgegebenen Drehung.

Ein nach diesem Verfahren hergestellter Faden wird anschließend als Faden zur Verstärkung von Bauteilen, insbesondere Antriebsriemen und Hochdruckschläuchen, eingesetzt. Aus diesem Faden können aber auch Gewebe oder Gelege hergestellt werden, die dann ihrerseits zur Verstärkung von Reifen oder Transportbändern oder ähnlichen hochbelastbaren Bauteilen Verwendung finden können.

## Patentansprüche

1. Verfahren zur Erzeugung von getränkten Verstärkungsfäden aus Hochleistungsfasern, insbesondere aus Glas-, Kohlenstoff- und Aramidfasem,
wobei die Fäden bei 0-Drehung oder bei einer Schutzdrehung von ≤ 120 Drehungen/m in Polymer-Dip getränkt werden,
die getränkten Fäden dann durch eine Düse gezogen werden,
die getränkten Fäden nach dem Austritt aus der Düse in einer ersten Heizzone oberflächlich getrocknet, im Kern aber noch feucht gehalten werden,
sie erst danach in einer zweiten Heizzone mit einer über die Schutzdrehung bis zu einer maximalen Gesamtdrehung von 400 Drehungen/m hinausgehenden Drehung versehen und durch Erhitzung in dieser Drehung fixiert werden und
die vorstehenden Verfahrensschritte kontinuierlich in einem Zuge durchgeführt werden.

2. Verfahren nach Anspruch 1, **dadurch gekennzeichnet, dass** die Fäden in der zweiten Heizzone mit einer Gesamtdrehung von 300 Drehungen/m bis 400 Drehungen/m versehen werden.

3. Verfahren nach Anspruch 1 oder 2, **dadurch gekennzeichnet, dass** der Feuchtegehalt der Fäden zumindest vor Eintritt in die zweite Heizzone auf einen bestimmten Wert konstant eingeregelt wird.

4. Verfahren nach einem der vorhergehenden Ansprüche, **dadurch gekennzeichnet, dass** die Fäden nach dem Fixieren aufgespult werden.

5. Verfahren nach Anspruch 4, **dadurch gekennzeichnet, dass** die Fäden beim Aufspulen endgetrocknet werden.

6. Verwendung von nach einem der vorhergehenden Ansprüche hergestellten Fäden zur Verstärkung von Antriebsriemen und Hochdruckschläuchen.

7. Verwendung von nach einem der Ansprüche 1 bis 5 hergestellten Fäden zur Herstellung von Geweben und Gelegen.

8. Verwendung der Gewebe und Gelege nach Anspruch 7 zur Verstärkung von Reifen und Transportbändern.

## Claims

1. Method for producing impregnated reinforcing threads from high performance fibres, in particular from glass, carbon and aramid fibres,
wherein zero-twist threads or threads with a protective twist of ≤ 120 turns/m are impregnated by immersion in a polymer-based dip,
the impregnated threads are then drawn through a nozzle,
the impregnated threads issuing from the nozzle are superficially dried in a first heating zone, whereas their core is still kept wet,
they are only at that moment given a twist over and above the protective twist, up to a maximal final twist of 400 turns/m, which occurs in a second heating zone, where they are heated to fix this twist,
and wherein the above process steps are carried out in only one continuous operation.

2. Method according to claim 1 **characterized in that** the threads are given a final twist between 300 turns/m and 400 turns/m in the second heating zone.

3. Method according to claim 1 or 2 **characterized in that** the moisture content of the threads, at least before they enter the second heating zone, is set to a definite constant value.

4. Method according to one of the foregoing claims **characterized in that** the threads, once fixed, are wound up

5. Method according to claim 4 **characterized in that** the threads, during winding up, are finally dried.

6. Use of threads produced according to one of the foregoing claims for the reinforcement of driving belts and high pressure hoses.

7. Use of threads produced according to one of the claims 1 to 5 for the manufacture of woven and non-crimp fabrics.

8. Use of the woven and non-crimp fabrics according to claim 7 for the reinforcement of tyres and conveyor belts.

## Revendications

1. Procédé pour la fabrication de fils renforçants imprégnés à partir de fibres de haute performance, en particuliers de fibres de verre, carbone et aramide,
au cours duquel des fils avec une torsion zéro ou une torsion protectrice de ≤ 120 tours/m sont imprégnés par trempage dans une préparation polymère,
les fils imprégnés sont ensuite tirés par une tuyère,
les fils imprégnés, au sortir de la tuyère, sont séchés superficiellement dans une première zone de chauffage, tandis que leur âme est maintenue humide,
on leur confère ensuite une torsion au-delà de la torsion protectrice, jusqu'à une torsion finale maximale de 400 tours/m, et les fixe avec cette torsion en les chauffant,
et au cours duquel les phases de procédé décrites ci-dessus se déroulent sous forme d'une seule opération continue.

2. Procédé selon la revendication 1, **caractérisé en ce que** les fils reçoivent une torsion finale comprise entre 300 tours/m et 400 tours/m, pendant qu'ils passent par une deuxième zone de chauffage.

3. Procédé selon la revendication 1 ou 2, **caractérisée en ce que** la teneur d'humidité des fils, au moins avant leur entrée dans la deuxième zone de chauffage, est réglée à une valeur constante bien déterminée.

4. Procédé selon une des revendications précédentes, **caractérisé en ce que** les fils, une fois fixés, sont embobinés.

5. Procédé selon la revendication 4, **caractérisé en ce que** les fils, pendant l'embobinage, sont soumis à un séchage final.

6. Utilisation de fils fabriqués selon une des revendications précédentes pour le renforcement de courroies de transmission et tuyaux souples à haute pression.

7. Utilisation de fils fabriqués selon une des revendications l'à 5 pour la fabrications de tissus et nappes.

8. Utilisation des tissus et nappes selon la revendication 7 pour le renforcement de pneumatiques et tapis roulants.
